## Europäisches Patentamt
## European Patent Office
## Office européen des brevets

(19)

(11) Numéro de publication: **0 003 691**
**B1**

(12) **FASCICULE DE BREVET EUROPEEN**

(45) Date de publication du fascicule de brevet:
**07.01.81**

(21) Numéro de dépôt: **79400036.4**

(22) Date de dépôt: **19.01.79**

(51) Int. Cl.³: **G 03 B 41/16**

(54) **Dispositif d'exposition pour appareil de radiodiagnostic, à écrans renforçateurs amovibles.**

(30) Priorité: **03.02.78 FR 7803101**

(43) Date de publication de la demande:
**22.08.79 Bulletin 79/17**

(45) Mention de la délivrance du brevet:
**07.01.81 Bulletin 81/1**

(84) Etats contractants désignés:
**DE GB IT SE**

(56) Documents cités:
**FR-A-1 582 951**
**FR-A-2 098 962**
**NL-A-6 408 857**
**US-A-3 222 518**
**US-A-3 904 531**

(73) Titulaire: **COMPAGNIE GENERALE DE RADIOLOGIE,**
**13 square Max-Hymans, F-75741 PARIS CEDEX 15 (FR)**

(72) Inventeur: **Bombray, Marcel, "THOMSON-CSF" -**
**SCPI 173, Bl. Haussmann, F-75360 Paris Cedex 08 (FR)**
Inventeur: **Caugant, Jean, "THOMSON-CSF" -**
**SCPI 173, Bl. Haussmann, F-75360 Paris Cedex 08 (FR)**

(74) Mandataire: **Thrierr, Francoise et al, "THOMSON-CSF"-**
**SCPI 173, bld Haussmann, F-75360 Paris Cedex 08 (FR)**

## Dispositif d'exposition pour appareil de radiodiagnostic, à écrans renforçateurs amovibles

La présente invention concerne un dispositif pour appareil de radiodiagnostic, appelé dispositif d'exposition, à écrans renforçateurs amovibles.

Dans les appareils de radiodiagnostic, l'image que donne, d'un corps à examiner, un faisceau de rayons X, peut être: mémorisée sur un film radiologique, il s'agit de radiographie; visualisée sans mémorisation sur un écran d'observation, par exemple par l'intermédiaire d'un tube amplificateur de luminance, il s'agit de radioscopie.

Il est connu que lorsqu'il s'agit de réaliser des radioscopies il est souhaitable que le dispositif d'exposition de l'appareil, c'est-à-dire le dispositif qui va être traversé par les rayons X sortant du corps à observer pour aller former une image radiologique sur le dispositif de visualisation, doit être le moins absorbant possible pour ne pas détériorer l'image.

Il est également bien connu que, lorsqu'il s'agit de réaliser une radiographie, le film sur lequel sera mémorisée l'image, doit être inséré entre des écrans renforçateurs d'image; ces écrans sont, une fois que le film est mis en place dans le champ d'exposition du dispositif d'exposition, pressés contre le film par des plateaux presseurs sur lesquels ils sont fixés.

Ces deux techniques rendent difficile l'utilisation d'un même appareil pour réaliser alternativement des examens radioscopiques et radiographiques.

Un appareil qui permet de tels examens alternés, le dispositif d'exposition pouvant être libéré de tout film lorsqu'il s'agit de réaliser une radioscopie, est déjà connu par la publication FR-A-2 062 095 (intitulée «Perfectionnements aux changeurs de films pour dispositifs de radioscopie et radiographie combinés»).

L'appareil décrit dans ce brevet présente toutefois certains inconvénients. En effet, si une disposition particulière des sections dites «de chargement», «d'exposition» et «d'éjection», et des mécanismes d'entraînement du film dans ces différentes sections, permet, sans avoir à effectuer aucune manipulation, d'avoir instantanément la section d'exposition vide de tout film, le dispositif d'exposition comporte toujours les écrancs renforçateurs d'image et leurs plateaux supports; ceci est néfaste à une bonne radioscopie.

Le but de la présente invention est de réaliser un dispositif d'exposition perfectionné, susceptible de s'adapter par exemple sur un appareil du type de celui décrit au brevet précité, et ne présentant pas ses inconvénients.

Pour cela, un dispositif d'exposition conforme à l'invention, pour appareil de radiodiagnostic susceptible d'être utilisé soit en radiographie, soit en radioscopie et équipé d'un changeur automatique de film comporte d'une part un chassis fixé au changeur automatique de film et rendant la section d'exposition étanche à la lumière, et comporte d'autre part un tiroir amovible susceptible de coulisser dans le chassis et supportant les écrans renforçateurs d'image, ce tiroir étant enlevé du chassis pour les radioscopies par un coulissement perpendiculaire à la direction de déplacement du film.

Un exemple de réalisation de l'invention est donné dans la description suivante illustrée par les figures annexées qui représentent:

– la figure 1, une vue très schématique d'un changeur de films conforme à la publication FR-A-2 062 095 précitée, sur lequel on a adapté un dispositif d'exposition conforme à la présente invention;

– la figure 2, une vue en perspective d'un dispositif d'exposition conforme à l'invention.

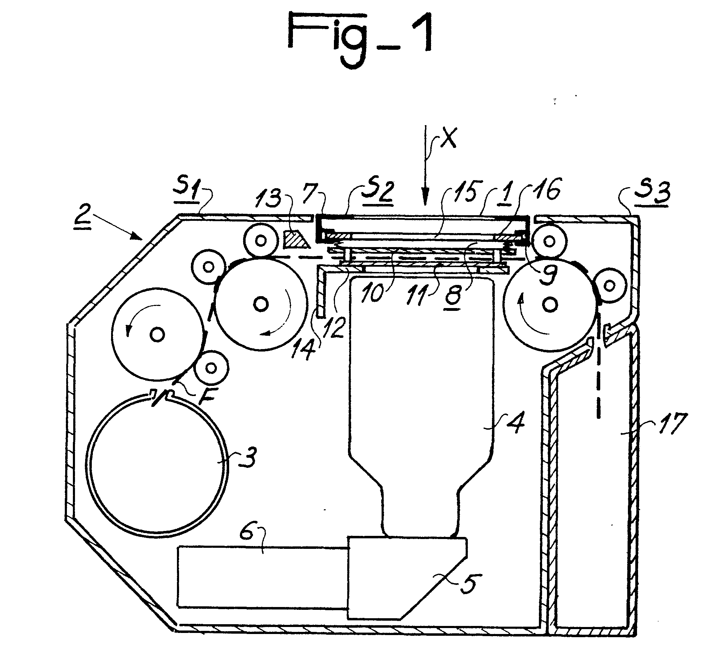

Un dispositif d'exposition 1 recevant les rayons X issus du corps à observer, est schématiquement représenté sur la figure 1 où il équipe la section d'exposition d'un changeur de films 2 du type décrit dans la publication FR-A-2 062 095 précitée. Il est entendu que cette utilisation n'est donnée qu'à titre d'exemple et que le dispositif de l'invention peut équiper d'autres types d'appareils radiologiques destinés à faire soit des radioscopies, soit des radiographies sur un film défilant dans l'appareil.

Dans cet exemple le film F, sortant d'une bobine 3 et entraîné et guidé dans la section de chargement $S_1$ par des moyens appropriés, arrive dans la section d'exposition $S_2$ équipée du dispositif d'exposition 1. Derrière ce dispositif 1 se trouvent, par exemple un amplificateur de luminance 4 équipé de son optique 5 et une caméra de télévision 6.

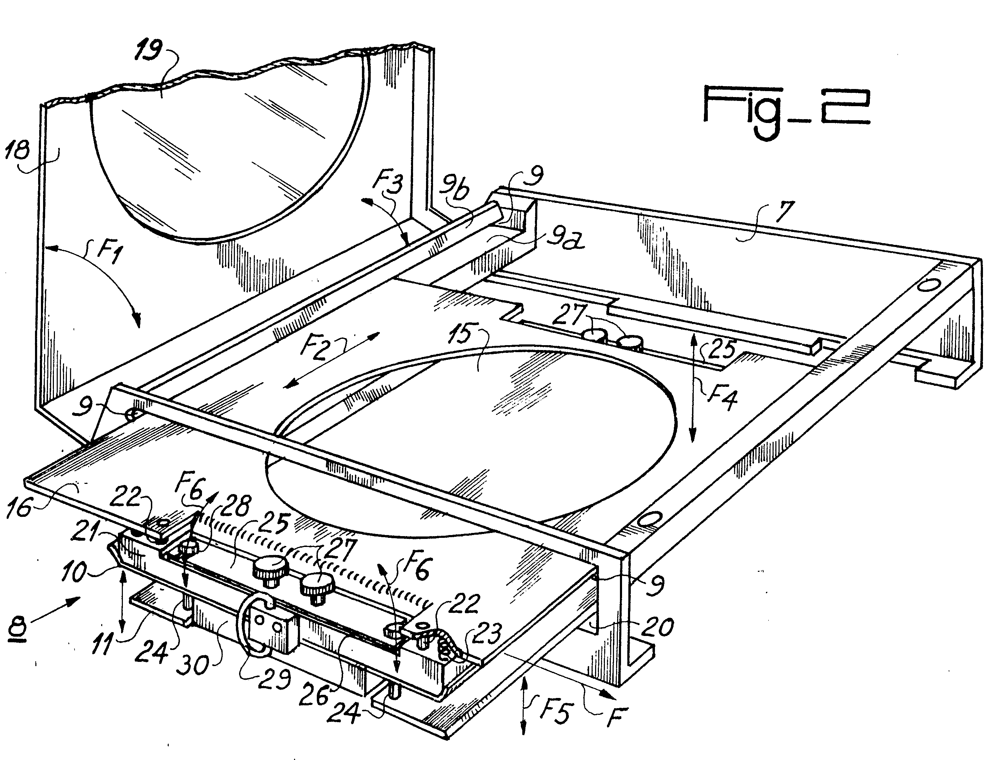

Le dispositif d'exposition 1, qui sera décrit plus en détail à la figure 2, comporte essentiellement un chassis 7 fixé au changeur automatique de film 2 de manière étanche à la lumière et un tiroir amovible 8 susceptible de coulisser dans des glissières du chaissis 7, perpendiculairement au sens de déplacement du film F.

Ce tiroir 8 comporte deux plateaux 10 et 11 qui supportent, sur leurs surfaces en regard, les écrans renforçateurs d'image (non représentés). La fixation détaillée de ces plateaux sera mieux expliquée à la figure 2; il suffit, ici, de savoir qu'ils sont montés élastiquement de manière que, lorsque le film F est en position entre eux, et qu'un plateau presseur 12 les actionne (verticalement sur la figure 1) ils s'appliquent contre le film qui se trouve lui-même coupé par l'effet de cisaillement des deux pièces 13 et 14. Il est à noter que le tiroir 8 peut être muni, dans l'ouverture 15 du plateau 16 par exemple, d'une classique grille anti-diffusante (non représentée).

La radiographie est ainsi effectuée lorsque le plateau presseur 12 presse les deux écrans de part et d'autre du film. Le plateau presseur redescend ensuite et le film, coupé et exposé, est alors pris en charge par la section d'éjection $S_3$, où des moyens appropriés l'entraînent vers un magasin 17.

Lorsqu'il s'agit d'effectuer des radioscopies, une trappe (non visible ici) est ouverte sur le côté du chassis de manière à donner accès au tiroir 8 qui est alors enlevé par coulissement, perpendiculairement au plan de la figure. Seul reste alors, intercalé entre les rayons X et l'amplificateur de luminance, le couvercle supérieur du chassis 7 du dispositif d'exposition. L'image est ainsi aussi peu atténuée que possible.

Lorsque doivent à nouveau être effectuées des radiographies, il suffit de remettre le tiroir 8 en place en le faisant coulisser dans le chassis 7.

La figure 2 représente, en perspective et de manière plus détaillée, un mode de réalisation du dispositif d'exposition de l'invention dont les caractéristiques essentielles ont été décrites à l'aide de la figure 1 sur laquelle un certain nombre d'éléments n'étaient représentés que de façon schématique, voire même symbolique.

Le chassis 7 dans lequel va coulisser le tiroir 8 est fermé, à sa partie supérieure, par un couvercle 18 basculant (flèche $F_1$) comportant une fenêtre 19 étanche à la lumière et peu absorbante pour les rayons X.

La face avant (figure 2) du chassis 7 comporte une ouverture rectangulaire 20 par laquelle le tiroir 8 peut être enlevé ou placé (flèche $F_2$) dans le cassis; une trappe (non représentée) vient ensuite refermer cette ouverture. Le coulissement du tiroir est assuré par la plaque 16 qui glisse dans les glissières 9. Il est à noter que la glissière 9 représentée à gauche sur la figure est articulée. Tandis que sa partie 9a est fixe, sa partie 9b peut légèrement basculer (flèche $F_3$), donnant la possibilité de sortir le tiroir 8 par le haut du chassis 7 (flèche $F_4$) lorsque le couvercle 18 a été ouvert. Cette possibilité présente un intérêt lorsque le mouvement coulissant (flèche $F_2$) du tiroir 8 est bloqué, par suite par exemple d'un mauvais positionnement ou d'une mauvaise coupe du film 7; dans ce cas le tiroir est sorti par le haut et le dispositif peut être nettoyé.

Les plateaux 10 et 11, support d'écrans, sont ici montés tous deux élastiquement sur le plateau coulissant 16. Cette disposition n'est pas la seule utilisable; elle présente l'avantage d'assurer une bonne pression des deux écrans de part et d'autre du film.

Le plateau 10 est fixé à une plaque 21 qui est guidée verticalement par des colonnettes 22 solidaires du plateau 16, logées dans des trous de la plaque 21. Des ressorts de rappel 23 tiennent plaque 21 et plateau 16 éloignés en l'absence d'une force verticale appliquée (flèche $F_5$) vers le haut au plateau inférieur 11 (par le plateau presseur 12 non représenté ici).

La plaque 21 comporte en outre des trous dans lesquels se déplacent les collonnettes 24 solidaires du plateau inférieur 11. Une force, selon $F_5$, appliquée vers le haut par le plateau presseur rapproche le plateau 11 du plateau 10. La force de rappel, qui l'en écarte lorsque le plateau presseur redescend, est ici donnée par un système élastique particulier. Ce système qui, bien entendu n'est pas le seul possible, consiste en une lame élastique 25 (ou deux 25 et 26), dont la partie centrale est fixée, par des vis 27, à la plaque 21, et dont les extrémités comportent une fente 28 qui vient se coincer dans une échancrure pratiquée sur le pourtour des colonnettes 24. Lorsque la force $F_5$ fait monter le plateau 11, ces échancrures soulèvent les extrémités des lames 25 et 26 (flèche $F_6$) qui servent de ressort de rappel.

Un des deux plateaux 10 ou 11, et par exemple le plateau inférieur 11 a avantageusement un profil un peu bombé en son centre de manière que, lors du rapprochement des plateaux 10 et 11 autour du film, l'air soit convenablement chassé, du centre vers les bords du film.

Un anneau 29 permet de tirer facilement le tiroir 8. Une pièce allongée 30, fixée au plateau 10 à chaque extrémité du tiroir, sert de chemin de guidage au film F.

Il est clair que les deux extrémités du tiroir 8, dont une est seulement visible sur la figure 2, sont sensiblement identiques.

**Revendications**

1. Dispositif d'exposition (1) pour appareil de radiodiagnostic susceptible d'être utilisé soit en radioscopie, soit en radiographie et équipé d'un changeur automatique de film (2) comportant: une première section ($S_1$) dite de chargement qui contient le rouleau de film vierge, une seconde section ($S_2$) dite d'exposition située en amont, par rapport à la source de rayonnement, d'un tube amplificateur de luminance (4) utilisé en radioscopie et qui comporte deux écrans renforçateurs d'image enserrant le film, qui arrive directement de la section de chargement lors d'une radiographie, et une troisième section ($S_3$) dite d'éjection et de stockage du film exposé, le dit dispositif d'exposition (1 étant caractérisé en ce qu'il comporte:
   - d'une part un chassis (7) fixé au changeur automatique de film (2) et rendant la section d'exposition étranche à la lumière;
   - d'autre part un tiroir amovible (8) susceptible de coulisser dans le chassis (7) et supportant les écrans renforçateurs d'images entre lesquels vient se positionner le film (F) pour les radiographies, ce tiroir (8) étant enlevé du chassis (7) pour les radioscopies, par un coulissement dans le chassis (7), perpendiculaire à la direction de déplacement du film dans le dispositif d'exposition.

2. Dispositif selon la revendication 1, caractérisé en ce que la face du chassis (7) qui reçoit les rayons X consiste en un couvercle (18) susceptible de s'ouvrir, une au moins des deux glissières (9) du chassis (7) dans lesquelles coulisse le tiroir amovible (8) pouvant s'ouvrir de manière à permettre de sortir le tiroir par la face du cassis (7) ainsi ouverte.

3. Dispositif selon la revendication 1, caractérisé en ce que le tiroir amovible (8) comporte un plateau (16) coulissant dans des glissières (9) du chassis (7), sur lequel sont fixés deux plateaux (10 et 11) supportant les écrans renforçateurs d'image, ces deux derniers plateaux étant fixés au plateau coulissant (16) de manière à se déplacer perpendiculairement au plan du film lorsqu'une force leur est appliquée et à venir alors enserrer ce film, des moyens élastiques assurant leur écartement lorsque cette force n'est pas appliquée.

4. Dispositif selon la revendication 3, caractérisé en ce que celui (10) des deux plateaux support d'écran renforçateur qui est voisin du plateau (16) coulissant est monté sur celui-ci de manière à en être, en l'absence de ladite force, maintenu écarté par des moyens élastiques, tandis que le deuxième (11) plateau support d'écran renforçateur est monté sur le premier plateau (10) support d'écran de manière à en être, en l'absence de ladite force, maintenu écarté par des moyens élastiques.

5. Dispositif selon la revendication 4, caractérisé en ce que le premier plateau (10) support d'écran se déplace, sous l'action de ladite force, le long de colonnettes (22) fixées sur le plateau coulissant (16), des ressorts (23) placés entre ces deux plateaux (16, 10) les maintenant écartés en l'absence de ladite force.

6. Dispositif selon la revendication 5, caractérisé en ce que le deuxième plateau (11) support d'écran est maintenu sur le premier (10) par d'autres colonnettes (24) qui se déplacent dans le premier plateau (10) support d'écran sous l'action de ladite force, des lames élastiques (25, 26) maintenant les deux plateaux support d'écran écartés l'un de l'autre, en l'absence de ladite force.

7. Dispositif selon la revendication 6, caractérisé en ce que les lames élastiques (25, 26) sont rigidement fixées au premier plateau (10) support d'écran en leur partie centrale tandis que leurs extrémités sont fixées aux extrémités sont fixées aux extrémités desdites autres colonnettes (24) qui ne sont pas fixées au deuxième plateau (11) support d'écran de manière que, sous l'action de ladite force, leur partie centrale suive le mouvement du premier plateau (10) et leurs extrémités celui du deuxième plateau (11).

8. Dispositif selon l'une quelconque des revendications précédentes, caractérisé en ce que l'un des deux plateaux (10, 11) support d'écran renforçateur est bombé en sa partie centrale.

9. Dispositif selon l'une quelconque des revendications précédantes, caractérisé en ce que le tiroir amovible (8 comporte une grille anti-diffusante.

**Patentansprüche**

1. Belichtungsvorrichtung (1) für ein mit einem automatischem Filmwechsler (2) ausgestattetes Röntgenuntersuchungsgerät zur Anwendung in der Röntgenoskopie und in der Röntgenographie, mit einem ersten Abschnitt (S$_1$), dem Ladeabschnitt, der die Rolle mit unbelichtetem Film enthält, einem zweiten Abschnitt (S$_2$), dem Belichtungsabschnitt, der sich vor der Strahlungsquelle befindet, einer Lichtverstärkerröhre (4), die bei der Röntgenoskopie angewendet wird und zwei Bildverstärkerschirme enthält, zwischen denen bei einer Röntgenaufnahme der direkt aus dem Ladeabschnitt kommende Film gehalten wird, und einem dritten Abschnitt (S$_3$), dem Ausgabe- und Aufbewahrungsabschnitt für den belichteten Film, gekennzeichnet durch
- einerseits am automatischen Filmwechsler (2) befestigten Rahmen (7), der den Belichtungsabschnitt lichtdicht macht;
- andrerseits einen herausziehbaren Schieber (8), der in dem Rahmen (7) gleitet und die Bildverstärkerschirme trägt, zwischen denen der Film (F) für die Röntgenaufnahmen zu liegen kommt, wobei der Schieber (8) für die Röntgenoskopie durch Verschieben im Rahmen (7) senkrecht zur Verschiebungsrichtung des Films in der Belichtungsvorrichtung aus dem Rahmen (7) entfernt ist.

2. Vorrichtung nach Anspruch 1, dadurch gekennzeichnet, dass die Fläche des Rahmens (7), die die Röntgenstrahlen empfängt von einem zu öffnenden Deckel (18) gebildet ist, und dass wenigstens eine von zwei Gleitführungen (9) des Rahmens (7), in denen der herabziehbare Schieber (8) gleitet, so geöffnet werden kann, dass der Schieber durch die auf diese Weise offene Fläche des Rahmens (7) herausnehmbar ist.

3. Vorrichtung nach Anspruch 1, dadurch gekennzeichnet, dass der herausziehbare Schieber (8) eine in den Gleitführungen (9) des Rahmens (7) gleitende Platte (16) aufweist, an der zwei Platten (10, 11) befestigt sind, die die Bildverstärkerschirme tragen, dass die zwei zuletzt genannten Platten an der gleitenden Platte (16) so befestigt sind, dass sie sich senkrecht zur Ebene des Films verschieben, wenn auf sie eine Kraft ausgeübt wird und dass sie auf diese Weise den Film zwischen sich halten, und dass elastische Mittel vorgesehen sind, die gewährleisten, dass sie sich voneinander entfernen, wenn die Kraft nicht ausgeübt wird.

4. Vorrichtung nach Anspruch 3, dadurch gekennzeichnet, dass diejenige (10) der zwei die Bildverstärkerschirme tragenden Platten, die der gleitenden Platte (16) benachbart ist, an dieser so angebracht ist, dass sie in Abwesenheit der Kraft mit Hilfe der elastischen Mittel im Abstand gehalten ist, während die zweite, einen Bildverstärkerschirm tragende Platte (11) an der ersten, einen Bildverstärkerschirm tragenden Platte (10) so angebracht ist, dass sie bei Fehlen der Kraft von den elastischen Mitteln im Abstand gehalten ist.

5. Vorrichtung nach Anspruch 4, dadurch gekennzeichnet, dass die erste, einen Bildverstärkerschirm tragende Platte (10) sich unter dem Einfluss der Kraft längs Stiften (22) verschiebt, die an der gleitenden Platte (16) befestigt sind, und dass Federn (23) zwischen den zwei Platten (16, 10) diese bei Fehlen der Kraft im Abstand voneinander halten.

6. Vorrichtung nach Anspruch 5, dadurch gekennzeichnet, dass die zweite, einen Bildverstärkerschirm tragende Platte (11) mit Hilfe weiterer Stifte (24) auf der ersten Platten (10) gehalten ist, die sich in der ersten Platte (10) unter der Einwirkung der Kraft verschieben, und dass elastische Zungen (25, 26) die zwei die Bildverstärkerschirme tragenden Platten bei Fehlen der Kraft im Abstand voneinander halten.

7. Vorrichtung nach Anspruch 6, dadurch gekennzeichnet, dass die elastischen Zungen (25, 26) mit ihrem Mittelabschnitt starr an der ersten, einen Bildverstärkerschirm tragenden Platte (10) befestigt sind, während ihre Enden an den Enden der weiteren Stifte (24) befestigt sind, die nicht an der zweiten, einen Bildverstärkerschirm tragenden Platte (11) befestigt sind, so dass unter dem Einfluss der Kraft der Mittelabschnitt der Bewegung der ersten Platte (10) folgt, während ihre Enden der Bewegung der zweiten Platte (11) folgen.

8. Vorrichtung nach einem der vorhergehenden Ansprüche, dadurch gekennzeichnet, dass eine der zwei die Bildverstärkerschirme tragenden Platten (10, 11) in ihrem Mittelbereich gewölbt ist.

9. Vorrichtung nach einem der vorhergehenden Ansprüche, dadurch gekennzeichnet, dass der herausziehbare Schieber (8) ein streuungsverhinderndes Gitter aufweist.

**Claims**

1. Exposure apparatus (1) for a radiodiagnostic apparatus equipped with an automatic film changer (2) for use in radioscopy and in radiography, comprising a first section ($S_1$), the charging section, which contains the roll with unexposed film, a second section ($S_2$), the exposure section, which is disposed in front of the radiation source, a light amplifier tube (4) which is used in radioscopy and comprises two image amplifier screens between which in radiography the film coming directly from the charging section is held, and a third section ($S_3$), the ejection and storage section for the exposed film, characterized by
– on the one hand a frame (7) secured to the automatic film changer (2) and rendering the exposure section light-tight;
– on the other hand a withdrawable slide (8) which slides in the frame (7) and carries the image amplifier screens between which the film (F) for the radiographs comes to lie, the slide (8) being removed for radioscopy from the frame (7) by displacement in the frame (7) perpendicularly to the displacement direction of the film in the exposure apparatus.

2. Apparatus according to claim 1, characterized in that the face of the frame (7) which receives the X-rays is formed by a cover (18) to be opened and that at least one of two slide guides (9) of the frame (7) in which the withdrawable slide (8) slides can be so opened that the slide can be removed from the face of the frame (7) thus open.

3. Apparatus according to claim 1, characterized in that the withdrawable slide (8) comprises a plate (16) which slides in the slide guides (9) of the frame (7) and on which two plates (10, 11) are mounted which carry the image amplifier screens, that the two lastmentioned plates are mounted on the sliding plate (16) in such a manner that they are displaced perpendicularly to the plane of the film when a force is exerted on them and that in this manner they hold between them the film, and that resilient means are provided which ensure that they move apart when the force is not exerted.

4. Apparatus according to claim 3, characterized in that the plate (10) of the two plates carrying the image amplifier screens which is adjacent the sliding plate (16) is arranged on the latter so that in the absence of the force it is held with the aid of the resilient means in spaced relationship whilst the second plate (11) carrying an image amplifier screen is arranged on the first plate (10) carrying an image amplifier screen so that on absence of the force it is held in spaced relationship by the resilient means.

5. Apparatus according to claim 4, characterized in that the first plate (10) carrying an image amplifier screen is displaced under the influence of the force along pins (22) which are mounted on the sliding plate (16) and that springs (23) between the two plates (16, 10) hold the latter in spaced relationship in the absence of the force.

6. Apparatus according to claim 5, characterized in that the second plate (11) carrying an image amplifier screen is held with the aid of further pins (24) on the first plate (10) which are displaced in the first plate (10) under the action of the force and that resilient tongues (25, 26) hold the two plates carrying the image amplifier screens in spacedrelationship in the absence of the force.

7. Apparatus according to claim 6, characterized in that the resilient tongues (25, 26) are secured with their centre portion rigidly to the first plate (10) carrying an image amplifier screen whilst their ends are secured to the ends of the further pins (24) which are not secured to the second plate (11) carrying an image amplifier screen so that under the influence of the force the centre portion follows the movement of the first plate (10) whilst its ends follow the movement of the second plate (11).

8. Apparatus according to any one of the preceding claims, characterized in that one of the two plates (10, 11) carrying the image amplifier screens is arched in its centre portion.

9. Apparatus according to any one of the preceding claims, characterized in that the withdrawable slide (8) comprises an antidiffusion grating.

# Fig_1

Fig_2

19

18

F1

F3

9b

9

9a

7

F2

15

27

25

F4

16

22

F6

28

25

27

F6

21

10

22

9

8

11

24

30

29

26

24

23

20

F5

F

9

0 003 691